Europäisches Patentamt

European Patent Office

Office européen des brevets

(19)

(11) Veröffentlichungsnummer: **0 335 856**
**A1**

## (12) EUROPÄISCHE PATENTANMELDUNG

(21) Anmeldenummer: 89890053.5

(22) Anmeldetag: 22.02.89

(51) Int. Cl.⁴: **B 22 D 19/04**
F 16 B 11/00

(30) Priorität: 28.03.88 AT 823/88

(43) Veröffentlichungstag der Anmeldung:
04.10.89 Patentblatt 89/40

(84) Benannte Vertragsstaaten:
BE CH DE ES FR GB GR IT LI LU NL SE

(71) Anmelder: Austria Metall Aktiengesellschaft
A-5282 Braunau am Inn (AT)

(72) Erfinder: Garnweidner, Peter
Otto v. Lilientalstrasse 32
A-5020 Salzburg (AT)

Stockhammer, Winfried
Englwirtstrasse 7
A-4950 Altheim (AT)

(74) Vertreter: Hain, Leonhard, Dipl.-Ing.
Tal 18/IV
D-8000 München 2 (DE)

(54) Fügeverbindung zwischen wenigstens einem Press- oder Walzteil und einem Gussstück.

(57) Fügeverbindung zwischen wenigstens einem Preß- oder Walzteil (1) und einem Gußstück (3), wobei die Verbindungsflächen Profilierungen (2) aufweisen und das Gußstück (3) am Preß- oder Walzteil (1) angegossen ist.

Fig.1

EP 0 335 856 A1

## Beschreibung

### Fügeverbindung zwischen wenigstens einem Preß- oder Walzteil und einem Gußstück

Herkömmlich können Strangpreßteile oder Walzteile mit einem Gußteil durch Kleben oder durch Schweißen verbunden werden. Das Kleben benötigt mehrere Arbeitsgänge und muß danach der überflüssige, aus der Verbindung austretende Kleber nach Beendigung des Klebevorganges entfernt werden.

Bei einer Verbindung durch Schweißen wird um die unterschiedliche Wandstärke zwischen Gußteil und dem Preß- oder Walzteil eine stark überhöhte Schweißnaht angebracht, die nach dem Schweißvorgang abgeschliffen bzw. abgehobelt werden muß. Je nach Legierung kann es auch notwendig sein, eine zweite Schweißnaht auf dem abgeschliffenen Bereich der ersten Naht aufzubringen, um einen Vergütungseffekt zu erzielen.

Alle diese Methoden sind zeitaufwendig und dadurch teuer. Eine Automatisierung ist nur schwer möglich. Das Einstreichen mit Kleber ist kaum ohne hohen aparativen Aufwand zu automatisieren. Beim Schweißverfahren benötigt man einen hohen Zerspannungsgrad, was unnötigen Anfall an Staub und Spänen zur Folge hat.

Erfindungsgemäß wird dadurch Abhilfe geschaffen, daß die Verbindungsflächen Profilierungen aufweisen und das Gußstück am Preß- oder Walzteil angegossen ist. Dadurch kann mit geringem Aufwand eine feste Verbindung zwischen Teilen dieser Art hergestellt werden.

In weiterer Ausgestaltung der Erfindung kann der Walz- oder Preßteil wenigstens eine hinterschnittene oder schwalbenschwanzförmige Profilierung an den Verbindungsflächen aufweisen und/oder die Verbindungsflächen Bohrungen, Riefen oder Absätze besitzen. Durch diese zusätzlichen Maßnahmen kann die Festigkeit einer solchen Verbindung noch weiter erhöht werden.

Die Verbindung eignet sich besonders für Massenfertigung, da sie leicht automatisierbar ist und hohe Stückzahlen mit wenigen Arbeitskräften möglich sind.

Ein besonders wirtschaftliches Fertigungsverfahren erfolgt in der Weise, daß die vorbereiteten Walz- oder Preßprofile in die Kokille für das Gußstück mit dem Teil ihrer Verbindungsflächen eingebracht werden und dieser einen, vorzugsweise hineinragenden Teil der Kokillenwand bildet, die Kokille in an sich bekannter Weise zu dem Profil hin abgedichtet und dann geschlossen wird, worauf sie mit Schmelze befüllt wird.

Es ist auch denkbar, die Schmelze unter Druck in die Kokille einzufüllen.

Bei diesem Verfahren entfällt das Entgraten der Verbindungsflächen, da sie einen Teil der Kokillenwand bilden.

Die Erfindung wird anhand nachstehender Zeichnungen beschrieben.

Es zeigen:

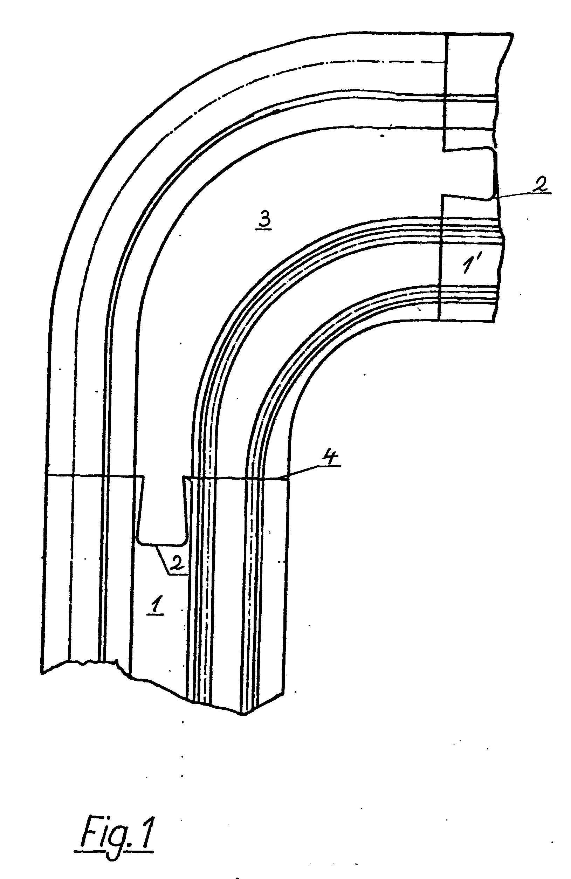

Fig. 1 eine Draufsicht auf eine erfindungsgemäße Fügeverbindung.

Fig. 2 ein Beispiel einer Verbindungsfläche an einem Strangpreßprofil.

Die Preßteile 1 und 1' sind mit schwalbenschwanzförmiger Profilierung 2 versehen. Der Gußteil 3 ist an die beiden Preßteile 1 und 1' angegossen.

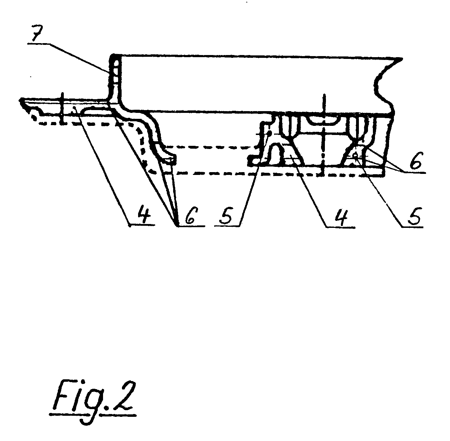

Die in Fig. 2 dargestellte Verbindungsfläche 4 besitzt zusätzlich Bohrungen 5 und Riefen 6, die die Haftung des Gußteiles 3 weiter verbessern. Durch den Absatz 7 in der Verbindungsfläche 4 kann die Verbindung einfach an die Gesamtform des herzustellenden Baukörpers angepaßt werden.

Die strichlierten Linien in Fig. 2 stellen die Umfangskonturen des Gußteiles dar, der an den Verbindungsflächen angegossen ist und das Profil ein Stück in der Längserstreckung mitumfaßt.

### Patentansprüche

1. Fügeverbindung zwischen wenigstens einem Preß- oder Walzteil und einem Gußstück, dadurch gekennzeichnet, daß die Verbindungsflächen Profilierungen aufweisen und das Gußstück (3) am Preß- oder Walzteil (1) angegossen ist.

2. Fügeverbindung nach Anspruch 1, dadurch gekennzeichnet, daß der Walz- oder Preßteil (1) wenigstens eine hinterschnittene oder schwalbenschwanzförmige Profilierung (2) an den Verbindungsflächen (4) aufweist.

3. Fügeverbindung nach einem der vorhergehenden Ansprüche, dadurch gekennzeichnet, daß die Verbindungsflächen (4) Bohrungen (5), Riegen (6) oder Absätze (7) aufweisen.

4. Verfahren zur Herstellung einer Fügeverbindung nach einem der vorhergehenden Ansprüche, dadurch gekennzeichnet, daß die vorbereiteten Walz- oder Preßprofile in die Kokille für das Gußstück (3) mit dem Teil ihrer Verbindungsflächen (4) eingebracht werden und hier einen, vorzugsweise hineinragenden Teil der Kokillenwand bildet, die Kokille in an sich bekannter Weise zu dem Profil hin abgedichtet und dann geschlossen wird, worauf sie mit Schmelze befüllt wird.

5. Verfahren nach Anspruch 4, dadurch gekennzeichnet, daß die Schmelze unter Druck eingefüllt wird.

Fig.1

_Fig.2_

Europäisches
Patentamt

**EUROPÄISCHER RECHERCHENBERICHT**

Nummer der Anmeldung

EP 89890053.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| A | <u>DE - A1 - 3 123 857</u><br>(SANDVIK AB.)<br>   * Seite 6, 1. Absatz; Anspruch<br>   1; Fig. 1,2 *<br>-- | 1-3 | B 22 D 19/04<br>F 16 B 11/00 |
| A | <u>DE - A - 2 006 893</u><br>(SCHÖLL G.)<br>   * Gesamt *<br>-- | 1,2 | |
| A | <u>DD - A - 143 405</u><br>(MAN)<br>   * Seite 1, Zeile 20; Anspruch<br>   1; Fig. 4 *<br>-- | 3 | |
| A | <u>CH - A5 - 639 185</u><br>(VORWERK U. SOHN GMBH)<br>   * Fig. *<br>-- | 1-3 | |
| A | <u>DE - A1 - 2 725 979</u><br>(BRIDGESTONE CYCLE CO.)<br><br>---- | | |

RECHERCHIERTE
SACHGEBIETE (Int. Cl. 4)

B 22 C 19/00
B 22 D 19/00
B 22 D 25/00
F 16 S  3/00
F 16 B  4/00
F 16 B  5/00
F 16 B 11/00

Der vorliegende Recherchenbericht wurde für alle Patentansprüche erstellt.

| Recherchenort | Abschlußdatum der Recherche | Prüfer |
|---|---|---|
| WIEN | 09-06-1989 | RIEDER |